# EUROPÄISCHE PATENTANMELDUNG

(11) **EP 4 265 998 A1**
(43) Veröffentlichungstag der Anmeldung: **25.10.2023**
(21) Anmeldenummer: 23020183.2
(22) Anmeldetag: 17.04.2023
(51) Int. Cl.: G01B 5/012, G01B 5/016

(54) **VORRICHTUNG UND VERFAHREN ZUM VERMESSEN VON PRÜFLINGEN**

(30) Priorität: 21.04.2022 DE 102022001371
(71) Anmelder: Grob-Werke GmbH & Co. KG, 87719 Mindelheim (DE)
(72) Erfinder: Kormann, Benjamin, 87719 Mindelheim (DE)

(57) **Zusammenfassung**

Es wird eine Vorrichtung zum taktilen Antasten von Messpunkten zum Ermitteln einer Geometrie eines Prüflings, mit einem Schaltmesstaster, der eine Tastspitze zum taktilen Antasten von Messpunkten aufweist, und der ausgebildet ist, beim Antasten eines Messpunkts einen insbesondere elektrischen Messimpuls zu erzeugen, wobei der Schaltmesstaster in wenigstens einer linearen Bewegungsrichtung bewegbar ist, und wobei die Vorrichtung ausgebildet ist, beim Auftreten eines Messimpulses die momentanen Koordinaten der Tastspitze zu erfassen, beschrieben.

Diese Vorrichtung soll mehr Messpunkte in kürzerer Zeit mit einem Schaltmesstaster aufnehmen können. Zur Lösung dieser Aufgabe wird vorgeschlagen, der Schaltmesstaster um eine Drehachse drehbar ist, wobei die Tastspitze exzentrisch zu der Drehachse angeordnet ist. Es wird des Weiteren ein entsprechendes Verfahren beschrieben.

## Beschreibung

Die Erfindung betrifft das Antasten von Messpunkten, um die Geometrie eines Prüflings zu ermitteln.

Bei dem Prüfling kann es sich insbesondere um ein in einer Werkzeugmaschine zu bearbeitendes Werkstück, oder um Bestandteile einer Werkzeugmaschine handeln, beispielsweise eine Spannvorrichtung oder einen Maschinentisch. Dabei werden insbesondere Teilbereiche einer Gesamtgeometrie ermittelt. Dabei werden in der Regel mehrere Messpunkte mit einer Tastspitze eines Messtasters angefahren und die Geometrie des Prüflings durch Antasten (Berühren) des Prüflings an den Messpunkten und Erfassen und Abspeichern der Koordinaten des Messpunkts ermittelt.

Wenn nur wenige Einzelpunkte angetastet werden müssen, wird ein Schaltmesstaster eingesetzt, der bei Berührung bzw. beim Abheben der Tastspitze den einen Schalter schließt bzw. öffnet und dabei einen in der Regel elektrischen Messimpuls, beispielsweise einen Spannungsimpuls oder eine Spannungsunterbrechung, erzeugt. Um den Schaltmesstaster zu betätigen, muss mindestens eine Bewegungsachse bei jedem Messvorgang vor und wieder zurück bewegt werden, was die Frequenz der Antastvorgänge limitiert. Bei dem bisherigen Verfahren mit Schaltmesstastern muss somit das Schaltsignal durch oszillierende Bewegung von mindestens einer Bewegungsachse erzeugt werden. Diese oszillierende Bewegung begrenzt erheblich die Geschwindigkeit, mit der die Antastpunkte/Messpunkte angefahren, angetastet/berührt und ihre Koordinaten aufgenommen werden können.

Wenn sehr viele Messpunkte entlang einer Linie aufgenommen werden sollen, werden oft taktil scannende Messtaster eingesetzt, deren Tastspitze permanent auf die Oberfläche gedrückt wird und die Auslenkung in mindestens einer Richtung kontinuierlich ausgegeben wird. Zusammen mit den Achsbewegungen der Maschine werden so sehr viele Einzelpunkte erzeugt. Für das taktile Scannen muss die Auslenkung der Tastspitze analog erfasst werden was um ein Vielfaches aufwändiger ist als bei den Schaltmesstastern.

Die Aufgabe der Erfindung liegt darin, mehr Messpunkte in kürzerer Zeit mit einem Schaltmesstaster aufnehmen zu können. Gleichzeitig soll die Komplexität nicht über die eines Schaltmesstaster hinaus gehen.

Diese Aufgabe wird durch eine Vorrichtung zum Antasten von Messpunkten zum Ermitteln einer Geometrie eines Prüflings mit den Merkmalen des Anspruchs 1 sowie durch ein Verfahren zum Antasten von Messpunkten zum Ermitteln einer Geometrie eines Prüflings mit den Merkmalen des Anspruchs 4 gelöst. Vorteilhafte Ausführungsformen ergeben sich aus den Unteransprüchen.

Die erfindungsgemäße Vorrichtung zum Antasten von Messpunkten zum Ermitteln einer Geometrie eines Prüflings weist einen Schaltmesstaster auf, der eine Tastspitze zum taktilen Antasten von Messpunkten aufweist. Der Schaltmesstaster erzeugt beim Antasten eines Messpunkts, d.h. beim Berühren der Oberfläche des Prüflings an einem gewünschten Messpunkt mit seiner Tastspitze, einen insbesondere elektrischen Messimpuls, beispielsweise einen Spannungsimpuls oder eine Spannungsunterbrechung. Die Vorrichtung ist so ausgebildet, dass der Schaltmesstaster in wenigstens einer linearen Bewegungsrichtung bewegbar ist. Er kann jedoch mittels mehrerer Bewegungsachsen auch in weiteren Bewegungsrichtungen bewegbar sein, so dass nahezu beliebige Konturen der Oberfläche eines Prüflings abgefahren werden können.

Die Vorrichtung ist so ausgebildet, dass beim Auftreten eines Messimpulses die momentanen Koordinaten der Tastspitze erfasst werden, Dies kann beispielsweise erfolgen, indem der Messtaster in der Spindel einer Werkzeugmaschine angeordnet ist, die über eine Koordinatenerfassung verfügt.

Der Schaltmesstaster ist um eine Drehachse drehbar, und seine Tastspitze ist exzentrisch zu der Drehachse angeordnet. Durch die exzentrische Anordnung wird bewirkt, dass die Tastspitze, bei entsprechend eingestelltem Abstand der Drehachse von der zu vermessenden Oberfläche des Prüflings, bei der Drehung des Schaltmesstasters in der Frequenz der Drehzahl die Oberfläche des Prüflings berührt, d.h. sie antastet, und dabei jeweils einen Schaltimpuls auslöst, der die Erfassung der momentanen Koordinaten der Tastspitze durch die Vorrichtung sowie ihre Abspeicherung auslöst. Wird nun der rotierende Schaltmesstaster entlang der Oberfläche des Prüflings bewegt, berührt die Tastspitze sequentiell die Oberfläche, wobei der Abstand der Messpunkte vom Verhältnis zwischen Drehzahl und Geschwindigkeit der Linearbewegung abhängt. Dadurch können unter Verwendung eines Schaltmesstasters mit hoher Frequenz Messpunkte erreicht und abgetastet werden, ohne dass wie beim herkömmlichen Vermessen mit Schaltmesstastern ein Messpunkt zunächst angefahren und dann eine Umkehr der Bewegungsrichtung der Linearbewegung erfolgen muss, um den Messtaster wieder von der Oberfläche wegzubewegen, verbunden mit einer weiteren Umkehr der Bewegungsrichtung, um den nächsten Messpunkt anzufahren und ihn anzutasten.

Das Antasten der Messpunkte erfolgt taktil, d.h. die Tastspitze des Schaltmesstasters berührt beim Antasten die Oberfläche des Prüflings.

In einer weiteren vorteilhaften Ausgestaltung wird der Schaltmesstaster exzentrisch in der Spindel einer Werkzeugmaschine, beispielsweise einer Fräsmaschine angeordnet. Dann können sowohl die Drehbewegung als auch die Linearbewegungen über die entsprechenden Antriebe der Spindel bewirkt werden, und auch die Koordinatenerfassung der Werkzeugmaschine/ der Spindelantriebe kann verwendet werden.

In einer vorteilhaften Ausgestaltung des erfindungsgemäßen Verfahrens kann der erforderliche Abstand der Tastspitze von der zu vermessenden Oberfläche des Prüflings, der so eingestellt sein muss, das bei vorgegebener Exzentrizität die Tastspitze bei jeder Umdrehung des Schaltmesstasters einmal die Oberfläche berührt, eingestellt werden, indem die Bahnführung der Tastspitze entlang der Oberfläche mittels vorhandener Geometriedaten des Prüflings, beispielsweise einer Rohkontur oder von CAD-Daten, gesteuert wird. Damit kann auch bei nicht ebenen Oberflächen sichergestellt werden, dass die Tastspitze den für die Vermessung erforderlichen Abstand von der zu vermessenden Oberfläche stets einhält, wenn sie mit den Linearantrieben entlang der Oberfläche bewegt wird.

Ein Ausführungsbeispiel der Erfindung wird nachfolgend anhand der beigefügten Zeichnungen beschrieben.

Es zeigen:

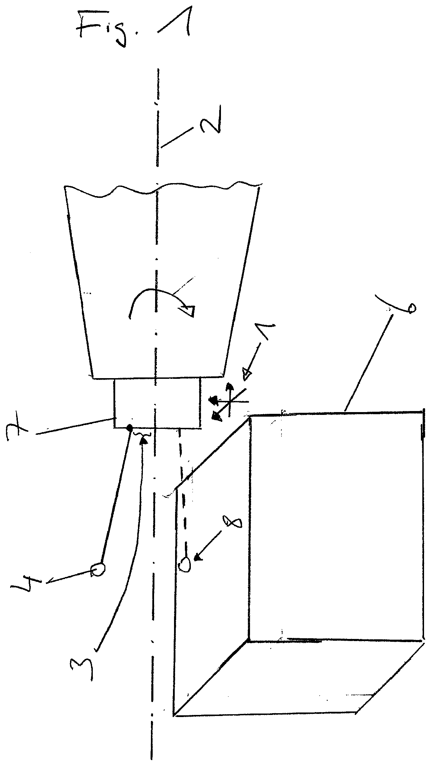

- Fig. 1:: eine perspektivische Ansicht einer erfindungsgemäßen Vorrichtung,

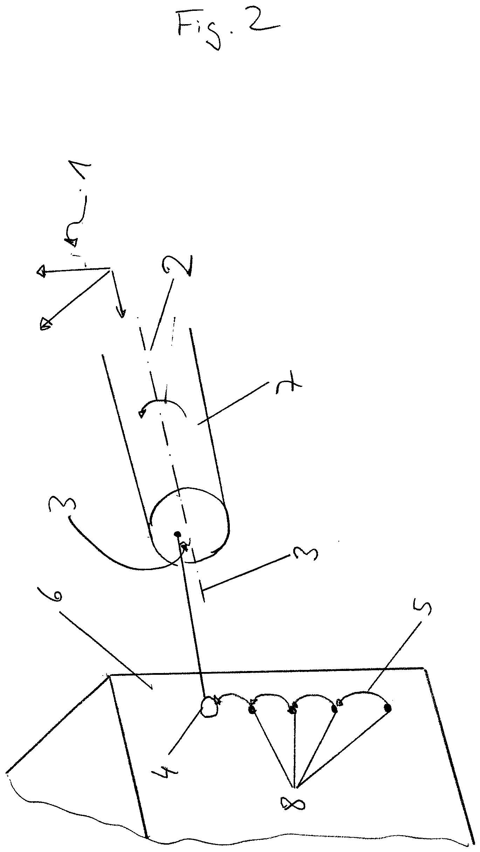

- Fig. 2:: eine perspektivische Ansicht einer erfindungsgemäßen Vorrichtung bei einem erfindungsgemäßen Verfahrensablauf.

Zu sehen ist in den Figuren ein Messtaster 7 mit einer exzentrisch zur Rotationsachse 9 angebrachten Tastspitze 4. Die Exzentrizität ist mit 3 bezeichnet.

Durch simultane lineare Bewegung 1 und rotative Bewegung 2 entsteht eine resultierende Bewegung 5 die ständig den Schaltmesstaster 7"triggert", wenn dieser die Oberfläche des zu vermessenden Prüflings 6 berührt, d.h. ein insbesondere elektrisches Schaltsignal auslöst. Die Abstände der Antastpunkte/Messpunkte 8 ergeben sich aus dem Verhältnis der Drehzahl 2 und der Geschwindigkeit der Bewegung 1.

Bei Verwendung von mehr als einer Achse für die Bewegung 1 können beliebige Bahnen, auf denen die Messpunkte 8 angetastet werden, erzeugt werden.

### BEZUGSZEICHENLISTE

- 1: lineare Bewegung
- 2: Drehachse
- 3: Exzentrizität
- 4: Tastspitze
- 5: resultierende Bewegung/Bahn der Messpunkte
- 6: Prüfling
- 7: Schaltmesstaster
- 8: Antastpunkte/Messpunkte

## Patentansprüche

1. Vorrichtung zum Antasten von Messpunkten (8) zum Ermitteln einer Geometrie eines Prüflings (6), mit
- einem Schaltmesstaster (7), der eine Tastspitze (4) zum Antasten von Messpunkten (8) aufweist, und der ausgebildet ist, beim Antasten eines Messpunkts (8) einen insbesondere elektrischen Messimpuls zu erzeugen,
- wobei der Schaltmesstaster (7) in wenigstens einer linearen Bewegungsrichtung (1) bewegbar ist,
- und wobei die Vorrichtung ausgebildet ist, beim Auftreten eines Messimpulses die momentanen Koordinaten der Tastspitze (4) zu erfassen,
**dadurch gekennzeichnet, dass**
der Schaltmesstaster (7) um eine Drehachse (2) drehbar ist, und
wobei die Tastspitze (4) exzentrisch zu der Drehachse (2) angeordnet ist.

2. Steuerungsvorrichtung nach Anspruch 1,
**dadurch gekennzeichnet, dass**
die wenigstens eine lineare Bewegung des Schaltmesstasters (7) durch den Linearantrieb einer Spindel einer Werkzeugmaschine bewirkt wird.

3. Steuerungsvorrichtung nach Anspruch 1 oder 2,
**dadurch gekennzeichnet, dass**
die Drehbewegung des Schaltmesstasters (7) durch den Drehantrieb einer Spindel einer Werkzeugmaschine bewirkt wird

4. Verfahren zum Antasten von Messpunkten (8) zum Ermitteln einer Geometrie eines Prüflings (6), mit
- einem Schaltmesstaster (7), der eine Tastspitze (4) zum Antasten von Messpunkten (8) aufweist, und der ausgebildet ist, beim Antasten eines Messpunkts (8) einen insbesondere elektrischen Messimpuls zu erzeugen,
- wobei der Schaltmesstaster (7) in wenigstens einer linearen Bewegungsrichtung (1) bewegbar ist,
- der Schaltmesstaster (7) um eine Drehachse (3) drehbar ist,
- und wobei die Tastspitze (4) exzentrisch zu der Drehachse (3) angeordnet ist. wobei
der Schaltmesstaster (7) mit einer vorgegebenen Drehzahl um die Drehachse (3) gedreht wird,
der Abstand der Tastspitze (4) des Schaltmesstasters (7) zum Prüfling (6) so eingestellt wird, dass beim Bewegen des Schaltmesstasters (7) in der wenigstens einen linearen Bewegungsrichtung (1), entlang einer zu vermessende Oberfläche des Prüflings (6), die Tastspitze (4) die zu vermessende Oberfläche in der Frequenz der vorgegebenen Drehzahl antastet, so dass der Schaltmesstaster (7) bei der Berührung der Oberfläche beim Antasten einen Messimpuls erzeugt,
beim Auftreten eines Messimpulses die jeweiligen momentanen Koordinaten der Tastspitze (4) erfasst und gespeichert werden,
und wobei der Schaltmesstaster (7) in der wenigstens einen linearen Bewegungsrichtung (1) derart bewegt wird, dass gewünschte Messpunkte (8) der Oberfläche des Prüflings (6) durch die Tastspitze (4) sequenziell angetastet werden.

5. Verfahren nach Anspruch 4,
wobei der Abstand der Tastspitze (4) des Schaltmesstasters (7) zum Prüfling (6) in Abhängigkeit von momentanen Koordinaten der Tastspitze (4) sowie gespeicherten Geometriedaten des Prüflings (6) angepasst wird.
